# FASCICULE DE BREVET EUROPEEN

(11) **EP 0 558 430 B1**
(45) Date de publication et mention de la délivrance du brevet: **05.06.1996**
(21) Numéro de dépôt: 93440022.7
(22) Date de dépôt: 25.02.1993
(51) Int. Cl.: A01B 71/06, A01D 75/20, A01D 80/00

(54) **Andaineur de fourrage avec un mécanisme pour interrompre l'entraînement du rotor**
Heuschwader mit einem Mechanismus zur Unterbrechung des Rotorantriebes
Hay windrower with a mechanism for stopping the driving of the rotor

(30) Priorité: 28.02.1992 FR 9202634
(43) Date de publication de la demande: 01.09.1993
(73) Titulaire: KUHN S.A., F-67700 Saverne (FR)
(72) Inventeur: Demanet, Didier, F-57444 Reding (FR); Helfer, Marc, F-67450 Lampertheim (FR)
(74) Mandataire: Andres, Jean-Claude

(56) Documents cités:
- EP-A- 0 083 460
- DE-A- 3 140 917
- DE-U- 8 712 165
- US-A- 4 026 093
- Prospectus Kuhn 9202089 du 02.01.87

## Description

La présente invention concerne un andaineur de fourrage comportant une structure pouvant être liée à un tracteur et portant au moins un rotor d'andainage pouvant être entraîné en rotation durant le travail à partir d'un arbre de prise de force situé sur le tracteur et un dispositif de protection qui entoure au moins partiellement ledit rotor, lequel dispositif de protection possède au moins une partie latérale repliable en vue de réduire sa largeur.

Une telle machine est connue par le prospectus KUHN N° 9202089 de janvier 1987 montrant un andaineur type GA 381 GM.

Pour mettre un tel andaineur dans la position de transport, il faut arrêter la rotation du rotor et réduire ses dimensions pour l'amener dans les limites autorisées pour le déplacement sur les routes.

Sur la plupart des andaineurs connus, l'utilisateur coupe tout d'abord l'entraînement de l'arbre de prise de force du tracteur afin d'immobiliser le rotor. Ensuite il replie les parties latérales du dispositif de protection vers le haut et démonte les parties extérieures des bras porte-outils du rotor afin de diminuer son diamètre.

Sur ces machines, il est toutefois possible d'enclencher accidentellement l'entraînement de l'arbre de prise de force qui fera tourner le rotor. Si le dispositif de protection n'est pas en place, ledit rotor peut alors entrer en collision avec des obstacles et subir et/ou provoquer d'importants dégâts. Il peut également blesser les personnes qui pourraient être touchées par ses bras.

La présente invention a pour but de supprimer les inconvénients des machines connues.

A cet effet, une importante caractéristique de l'invention consiste en ce que l'andaineur comporte un mécanisme pour interrompre l'entraînement en rotation du rotor et un moyen de commande dudit mécanisme, lequel moyen de commande est relié à une partie latérale repliable du dispositif de protection.

Ce mécanisme provoque automatiquement la coupure de l'entraînement du rotor lorsque la ou les parties latérales du dispositif de protection sont repliées. De ce fait, tout risque d'un entraînement accidentel du rotor, lorsque le dispositif de protection n'est pas en place, est exclu. La sécurité est ainsi considérablement améliorée.

Le mécanisme selon l'invention comprend un baladeur qui coulisse sur un arbre cannelé mené et qui peut être partiellement engagé sur un arbre cannelé meneur. Un ressort de pression agit sur le baladeur et le pousse en direction de l'arbre meneur. Le moyen de commande du baladeur se compose d'une tige de manoeuvre et d'un flexible qui est lié à ladite tige et à une partie latérale repliable du dispositif de protection. La tige de manoeuvre comporte une fourche qui est engagée dans une gorge du baladeur et qui déplace ce dernier.

Selon une autre caractéristique, l'andaineur comporte en sus un vérin hydraulique qui est lié aux parties latérales repliables du dispositif de protection. Il est ainsi possible de mettre ce dispositif en position de transport à partir du tracteur. Simultanément, l'entraînement du rotor est coupé, ce qui permet d'éviter toute collision.

Dans tous les cas, la liaison entre les moyens d'entraînement du rotor se rétablit automatiquement lorsque le dispositif de protection est ramené dans la position de travail.

D'autres caractéristiques et avantages de l'invention ressortiront des autres sous-revendications et de la description ci-après d'un exemple de réalisation non-limitatif de l'invention, avec référence aux dessins annexés dans lesquels :
- La figure 1 représente une vue de dessus d'une machine selon l'invention ;
- La figure 2 représente, à plus grande échelle, une vue de côté, avec une coupe partielle, de cette machine ;
- La figure 3 représente, en coupe et à plus grande échelle, le mécanisme selon l'invention.

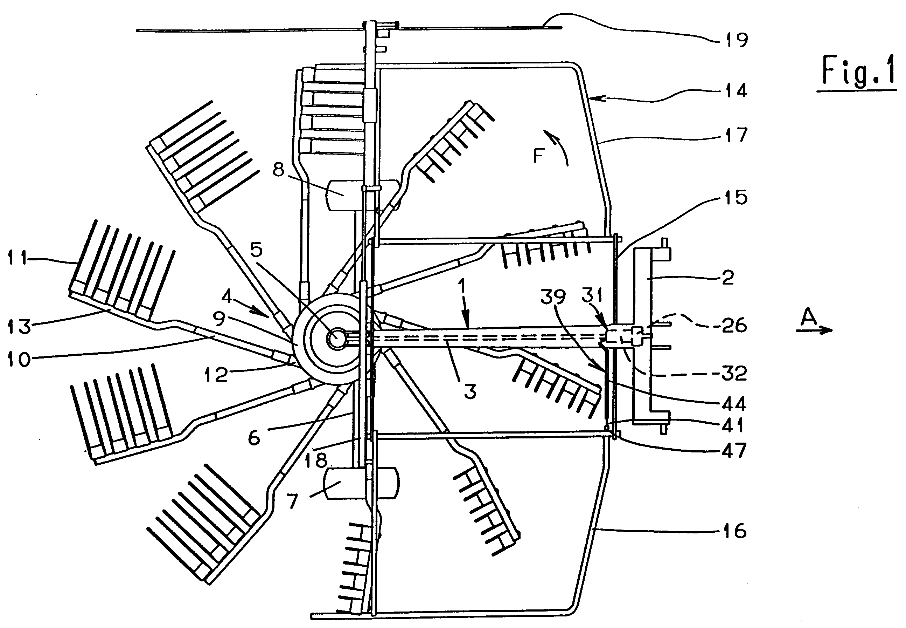

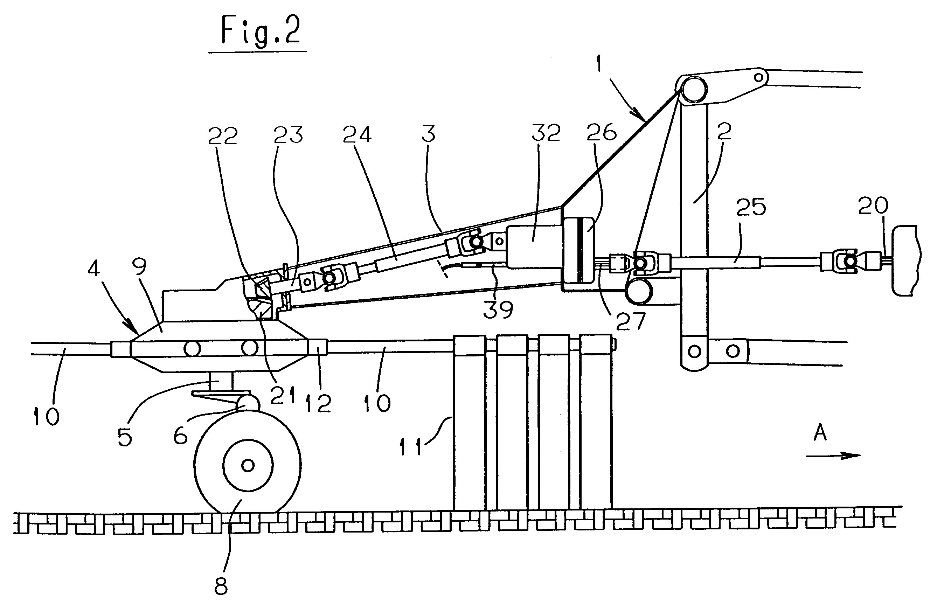

L'andaineur représenté sur les figures 1 et 2 comporte une structure (1) pouvant être accouplée à un tracteur non représenté. Cette structure (1) se compose essentiellement d'un chevalet d'attelage (2) et d'un support (3) de forme allongée. Ce support (3) porte un rotor d'andainage (4). Celui-ci est monté de manière à pouvoir tourner sur un axe (5) sensiblement vertical qui est lié au support (3). Cet axe (5) comporte à son extrémité inférieure une traverse (6) avec deux roulettes (7, 8) qui se déplacent sur le sol dans la position de travail. Le rotor (4) se compose d'un boîtier rotatif (9) muni de plusieurs bras (10) qui s'étendent pratiquement dans un plan horizontal et qui portent des outils de travail (11) constitués par des fourches. Ces bras (10) sont montés dans des paliers (12) dudit boîtier (9), de manière à pouvoir pivoter autour de leurs axes géométriques longitudinaux. Dans ce boîtier (9) est disposée, d'une manière connue, une came de commande qui est fixée sur l'axe (5). Chaque bras porte-outils (10) possède à son extrémité située à l'intérieur du boîtier (9) un galet qui coopère avec ladite came de commande.

Ces bras porte-outils (10) sont réalisés en plusieurs parties. Ils comportent notamment une partie extérieure (13) qui est démontable. Il est ainsi possible de réduire le diamètre du rotor (4) pour le transport.

Sur la moitié avant du rotor (4) est situé un dispositif de protection (14). Celui-ci est réalisé en une partie centrale (15) et deux parties latérales (16 et 17). La partie centrale (15) est constituée par deux traverses fixées sur la poutre (3). Chaque partie latérale (16, 17) est constituée par un cadre sensiblement en forme de trapèze qui est articulé sur ladite partie centrale (15) au moyen d'un de ses côtés. Chacune de ces parties latérales (16 et 17) peut être transposée au moyen de cette articulation dans deux positions. Dans une première position qui correspond à la position de travail, elles sont sensiblement horizontales et se situent légèrement au-delà des extrémités des bras porte-outils (10) (voir figure 1). Dans la deuxième position, ces parties latérales (16 et 17) sont repliées d'environ 90° par rapport à la partie centrale (15) et sont dirigées vers le haut. Dans cette position, la largeur du dispositif de protection (14) est considérablement réduite. Elle correspond à la position de transport.

Dans l'exemple représenté sur la figure 1, l'andaineur comporte un vérin hydraulique (18) qui est situé au-dessus du rotor (4) et qui est relié aux deux parties latérales (16 et 17) du dispositif de protection (14). Ce vérin (18) est raccordé au circuit hydraulique du tracteur et est commandé à partir de celui-ci. Lorsqu'il est commandé pour qu'il se rétracte, il tire sur les parties latérales (16 et 17) et les transpose automatiquement dans la position de transport. Inversement, lorsqu'il est commandé pour qu'il s'allonge, il fait revenir lesdites parties latérales (16 et 17) dans la position de travail.

La partie latérale (17) porte un déflecteur (19) ayant une hauteur à peu près égale à celle du rotor (4).

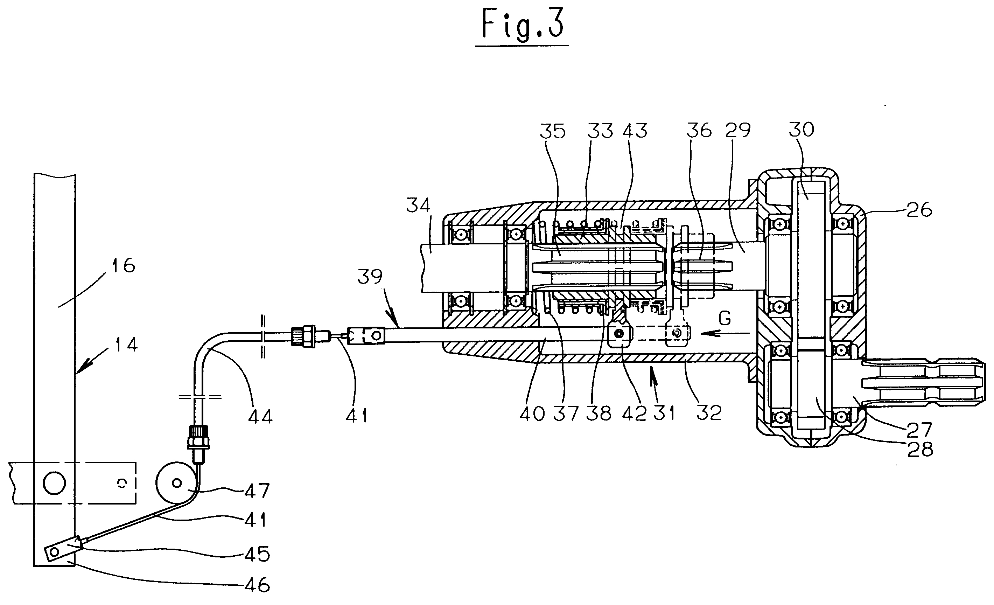

Le rotor (4) est entraîné en rotation durant le travail, à partir d'un arbre de prise de force (20) situé sur le tracteur. A cet effet, le boîtier (9) est muni d'une couronne dentée (21) avec laquelle engrène un pignon (22) solidaire d'un arbre d'entraînement (23). Cet arbre d'entraînement (23) est relié à l'arbre de prise de force (20) à travers deux arbres de transmission (24 et 25) et deux carters intermédiaires (26 et 32). Le carter (26) est fixé sur l'extrémité avant de la poutre (3). Il comporte un arbre d'entrée (27) qui est solidaire d'une première roue dentée (28) et un arbre de sortie (29) qui est solidaire d'une deuxième roue dentée (30). L'arbre d'entrée (27) est dirigé vers le tracteur alors que l'arbre de sortie (29) est dirigé vers le rotor (4). Les deux roues dentées (28 et 30) assurent à la fois un inversement du sens de rotation et une réduction de la vitesse de rotation. Le premier arbre de transmission (25) assure la liaison entre l'arbre d'entrée (27) dudit carter (26) et l'arbre de prise de force (20) du tracteur. Entre l'arbre de sortie (29) du carter (26) et le rotor (4) est disposé un mécanisme (31) pour interrompre l'entraînement en rotation du rotor (4). Ce mécanisme (31) est logé dans un carter additionnel (32) qui est fixé sur le carter (26) (voir figure 3). Il comprend un baladeur (33) qui est monté de manière à pouvoir coulisser sur l'extrémité d'un arbre de transmission intermédiaire (34). Ledit baladeur (33) est rendu solidaire en rotation de l'arbre intermédiaire (34) au moyen de cannelures (35). Cet arbre intermédiaire (34) est aligné avec l'arbre de sortie (29) du carter (26), lequel arbre de sortie (29) porte des cannelures (36) qui sont identiques à celles dudit arbre intermédiaire. Sur ce dernier est en sus prévu un ressort de pression (37). Celui-ci se situe entre la paroi du carter (32) et le baladeur (33). Il exerce une pression sur ce baladeur (33) qui est dirigée vers l'arbre de sortie (29). Entre ce ressort (37) et le baladeur (33) est disposée une butée à aiguilles (38). La deuxième extrémité de cet arbre intermédiaire (34) s'étend hors du carter additionnel (32) et est reliée à l'arbre d'entraînement (23) du rotor (4) au moyen du second arbre de transmission (24).

Le mécanisme (31) comporte un moyen de commande (39) pour déplacer le baladeur (33) axialement sur l'arbre intermédiaire (34). Ce moyen de commande (39) se compose d'une tige de manoeuvre (40) et d'un flexible (41) qui est lié à ladite tige (40) et à une partie latérale repliable (16) du dispositif de protection (14). Cette tige de manoeuvre (40) est guidée dans le carter additionnel (32) de manière à pouvoir se déplacer axialement. Elle comporte, à l'intérieur du carter additionnel (32), une fourche (42) qui est engagée avec un léger jeu dans une gorge (43) du baladeur (33). Cette fourche (42) assure une liaison dans le sens axial entre la tige (40) et le baladeur (33) tout en laissant ce dernier libre en rotation.

Le flexible (41) est avantageusement constitué par un câble. Il est en grande partie logé dans une gaine de guidage (44). Ledit flexible (41) est guidé au moyen de cette gaine (44), de telle sorte que son extrémité qui est reliée à la tige de manoeuvre (40) s'étende dans le prolongement de celle-ci. La gaine (44) assure en sus une protection du flexible (41).

La deuxième extrémité du flexible (41) est fixée sur une plaquette (45) qui est articulée sur une patte (46) de la partie latérale relevable (16) du dispositif de protection (14). Cette patte (46) est située de telle sorte qu'elle tire sur le flexible (41) lorsque la partie latérale (16) est déplacée dans la position de transport. Cette deuxième extrémité du flexible (41) passe avantageusement sur une poulie (47) qui est reliée à la partie centrale fixe (15) du dispositif de protection (14). Cette poulie (47) assure un bon guidage du flexible (41) tout en lui laissant la liberté nécessaire pour se déplacer avec la patte (46) de la partie relevable (16) du dispositif de protection (14).

Dans la position de travail qui est représentée sur la figure 1, les deux parties latérales (16 et 17) du dispositif de protection (14) sont dans la position sensiblement horizontale. Elles évitent ainsi que les bras porte-outils (10) rencontrent un obstacle lorsque la machine est déplacée dans le sens d'avancement (A). Dans cette position, le flexible (41) est relâché. Le baladeur (33) est alors poussé vers l'arbre de sortie (29) par le ressort (37), de sorte qu'il s'engage partiellement sur cet arbre (29). Cette position est représentée en traits mixtes sur la figure 3. Il assure ainsi la liaison entre ledit arbre de sortie (29) et l'arbre intermédiaire (34). Le mouvement d'entraînement peut alors se transmettre depuis l'arbre de prise de force (20) du tracteur jusqu'au rotor (4).

Durant la rotation du rotor (4) dans le sens (F), les galets des bras porte-outils (10) se déplacent dans la came qui est logée dans le boîtier (9). Cette came commande alors lesdits bras de telle sorte que leurs outils (11) soient dirigés vers le sol dans la partie avant de leur trajectoire et qu'ils pivotent vers le haut dans la partie latérale dans laquelle ils se déplacent vers l'arrière (vu dans la direction d'avancement (A)). Dans ladite partie avant, les outils (11) ramassent le fourrage se trouvant sur le sol. Ensuite, ils le déposent sous la forme d'un andain, par suite de leur pivotement, dans la partie latérale de leur trajectoire.

Lorsque la largeur de l'andaineur doit être réduite en vue du transport, les deux parties latérales (16 et 17) du dispositif de protection (14) sont relevées à la verticale. Dans le présent exemple, ce relevage est effectué au moyen du vérin hydraulique (18) qui est actionné de sorte qu'il se rétracte. Automatiquement la patte (46) de la partie latérale (16) tire sur le flexible (41) qui déplace la tige de manoeuvre (40) dans le sens de la flèche (G). La fourche (42) de cette tige (40) entraîne alors le baladeur (33) dans cette direction (G) jusqu'à ce qu'il ne soit plus en contact avec l'arbre de sortie (29). Le ressort (37) est alors comprimé.

Dans cette position, qui est représentée sur la figure 3, la transmission du mouvement d'entraînement entre l'arbre de prise de force (20) et l'arbre de transmission (24) est interrompu. Il n'y a alors plus aucun risque que le rotor (4) soit entraîné en rotation, par exemple par suite d'une fausse manoeuvre de la part de l'utilisateur.

Inversement, lorsque les parties latérales (16 et 17) du dispositif de protection (14) sont déplacées dans la position horizontale au moyen du vérin hydraulique (18), la liaison entre l'arbre de sortie (29) et l'arbre intermédiaire (34) se rétablit à nouveau automatiquement. L'utilisateur pourra alors enclencher la prise de force en vue de faire tourner le rotor (4).

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Andaineur de fourrage comportant une structure pouvant être liée à un tracteur, laquelle structure porte au moins un rotor d'andainage pouvant être entraîné en rotation durant le travail à partir d'un arbre de prise de force situé sur le tracteur et un dispositif de protection qui entoure au moins partiellement ledit rotor et qui possède une ou plusieurs parties latérales repliables, en vue de réduire ses dimensions, caractérisé par le fait qu'il comporte un mécanisme (31) pour interrompre l'entraînement en rotation du rotor (4) et un moyen de commande (39) dudit mécanisme (31), lequel moyen de commande (39) est relié à une partie latérale repliable (16) du dispositif de protection (14).

2. Andaineur selon la revendication 1, caractérisé par le fait que le mécanisme (31) comprend un baladeur (33) qui coulisse sur un arbre cannelé intermédiaire (34) et qui peut être partiellement engagé sur un arbre cannelé (29) entraîné à partir de l'arbre de prise de force (20) situé sur le tracteur.

3. Andaineur selon la revendication 2, caractérisé par le fait que le mécanisme (31) comporte un ressort de pression (37) agissant sur le baladeur (33).

4. Andaineur selon la revendication 1 ou 2, caractérisé par le fait que le moyen de commande (39) du baladeur (33) se compose d'une tige de manoeuvre (40) et d'un flexible (41) qui est lié à ladite tige de manoeuvre (40) et à la partie latérale repliable (16) du dispositif de protection (14).

5. Andaineur selon la revendication 4, caractérisé par le fait que le flexible (41) est guidé au moyen d'une gaine (44).

6. Andaineur selon la revendication 5, caractérisée par le fait que le flexible (41) est guidé au moyen de la gaine (44), de telle sorte que son extrémité qui est reliée à la tige de manoeuvre (40) s'étende dans le prolongement de celle-ci.

7. Andaineur selon la revendication 4, caractérisé par le fait que le flexible (41) passe sur une poulie (47) qui est reliée à la partie fixe (15) du dispositif de protection (14).

8. Andaineur selon la revendication 4, caractérisé par le fait que la tige de manoeuvre (40) comporte une fourche (42) qui est engagée dans une gorge (43) du baladeur (33).

9. Andaineur selon la revendication 1 ou 4, caractérisé par le fait qu'il comporte un vérin hydraulique (18) qui est lié aux parties latérales repliables (16 et 17) du dispositif de protection (14).

## Claims

1. Windrower for fodder comprising a structure which can be connected to a tractor vehicle, the said structure carrying at least one windrowing rotor which can be driven in rotation during work from a power take-off shaft located on the tractor vehicle and a protecting device surrounding at least partly the said rotor and which has one or several lateral folding parts, in order to reduce its dimensions, ***characterised in*** that it comprises a mechanism (31) to interrupt the driving in rotation of the rotor (4) and a control means (39) for the said mechanism (31), the said control means (39) being connected to a lateral folding part (16) of the protecting device (14).

2. Windrower in accordance with claim 1, ***characterised in*** that the mechanism (31) is provided with a sliding gear (33) which slides on an intermediate splined shaft (34) and which can be partly engaged over a splined shaft (29) driven from the power take-off shaft (20) located on the tractor vehicle.

3. Windrower in accordance with claim 2, ***characterised in*** that the mechanism (31) comprises a tension spring (37) acting on the sliding gear (33).

4. Windrower in accordance with claim 1 or 2, ***characterised in*** that the control means (39) of the sliding gear (33) is made up of an operating rod (40) and a flexible coupling (41) which is connected to the said operating rod (40) and to the lateral folding part (16) of the protecting device (14).

5. Windrower in accordance with claim 4, ***characterised in*** that the flexible coupling (41) is guided by means of a sheath (44).

6. Windrower in accordance with claim 5, ***characterised in*** that the flexible coupling (41) is guided by means of the sheath (44), so that its end which is connected to the operating rod (40) extends in the extension of the latter.

7. Windrower in accordance with claim 4, ***characterised in*** that the flexible coupling (41) passes on a pulley (47) which is connected to the stationary part (15) of the protecting device (14).

8. Windrower in accordance with claim 4, ***characterised in*** that the operating rod (40) comprises a fork (42) engaged in a groove (43) of the sliding gear (33).

9. Windrower in accordance with claim 1 or 4, ***characterised in*** that it comprises a hydraulic jack (18) which is connected to the lateral folding parts (16 and 17) of the protecting device (14).

## Patentansprüche

1. Schwader für Futter mit einer Struktur die an einem Traktor angehängt werden kann, welche Struktur zumindest einen Schwadrotor, der während des Betriebs von dem Zapfwellenantrieb des Traktors aus drehbar angetrieben werden kann und eine Schutzvorrichtung aufweist, die den Rotor zumindest teilweise umgibt und ein klappbares Seitenelement oder mehrere klappbare Seitenelemente zur Reduzierung ihrer Abmessungen besitzt, ***dadurch gekennzeichnet***, daß er ein Mechanismus (31) zur Unterbrechung des Drehantriebs des Rotors (4) und ein Betätigungsmittel (39) für diesen Mechanismus aufweist, welches Betätigungsmittel (39) mit einem klappbaren Seitenteil (16) der Schutzvorrichung (14) verbunden ist.

2. Schwader nach Anspruch 1, ***dadurch gekennzeichnet***, daß der Mechanismus (31) eine Schiebemuffe (33) aufweist, welche auf einer Zwischenzahnwelle (34) gleitet und teilweise auf eine von dem Zapfwellenantrieb (20) des Traktors aus angetriebene Zahnwelle (29) geschoben werden kann

3. Schwader nach Anspruch 2, ***dadurch gekennzeichnet***, daß der Mechanismus (31) mit einer Druckfeder (37) versehen ist, die auf die Schiebemuffe (33) wirkt.

4. Schwader nach Anspruch 1 oder 2, ***dadurch gekennzeichnet***, daß das Betätigungsmittel (39) der Schiebemuffe (33) aus einer Bedienungsstange (40) und aus einem flexiblen Verbindungsstuck (41), das mit der Bedienungsstange (40) und dem klappbaren Seitenteil (16) der Schutzvorrichung (14) verbunden ist, besteht.

5. Schwader nach Anspruch 4, ***dadurch gekennzeichnet***, daß das flexible Verbindungsstück (41) mittels einer Hülse (44) geführt ist.

6. Schwader nach Anspruch 5, ***dadurch gekennzeichnet***, daß das flexible Verbindungsstück (41) mittels der Hülse (44) derart geführt ist, daß sich sein mit der Bedienungsstange (40) verbundene Ende in der Verlängerung dieser letzteren erstreckt.

7. Schwader nach Anspruch 4, ***dadurch gekennzeichnet***, daß das flexible Verbindungsstück (41) über eine Rolle (47) läuft, welche mit dem feststehenden Teil (15) der Schutzvorrichtung (14) verbunden ist.

8. Schwader nach Anspruch 4, ***dadurch gekennzeichnet***, daß die Bedienungsstange (40) eine Gabel (42) aufweist, die in eine Rille (43) der Schiebemuffe (33) eingreift.

9. Schwader nach Anspruch 1 oder 4, ***dadurch gekennzeichnet***, daß er einen Hydraulikzylinder (18) aufweist, der mit den klappbaren Seitenteile (16 und 17) der Schutzvorrichtung (14) verbunden ist.
